# EUROPÄISCHE PATENTANMELDUNG

(11) **EP 1 637 312 A1**
(43) Veröffentlichungstag der Anmeldung: **22.03.2006**
(21) Anmeldenummer: 04022048.5
(22) Anmeldetag: 16.09.2004
(51) Int. Cl.: B29D 11/00, B29C 35/08

(54) **Verfahren und Vorrichtung zur Herstellung von Formkörpern, Insbesondere von ophthalmischen Linsen**

(71) Anmelder: Novartis AG, 4056 Basel (CH)
(72) Erfinder: Die Erfindernennung liegt noch nicht vor
(74) Vertreter: de Weerd, Petrus G.W.

(57) **Zusammenfassung**

Bei einem Verfahren zur Herstellung von Formkörpern wie z.B. Kontaktlinsen, wird ein Ausgangsmaterial, welches einen Photoinitiator mit einer spektralen Absorption (AC) in einem vorgegebenen Wellenlängenbereich enthält, mit einer vordefinierten Menge von Licht einer Wellenlänge aus diesem vorgegebenen Wellenlängenbereich beaufschlagt. Dadurch wird eine Polymerisation und/oder Vernetzung des Ausgangsmaterials ausgelöst und auf diese Weise ein entformbarer Formkörper gebildet. Die Intensität des Lichts wird gemessen, wozu ein breitbandiger Photoempfänger (511) verwendet wird, welchem ein Filter (510) vorgeschaltet ist, dessen Transmission (TC1,TC2,TC3;TC4) so ausgebildet ist, dass das durch das Filter (510) hindurch tretende und den Photoempfänger (511) beaufschlagende Licht in seiner Intensität dem vom Photoinitiator aufgrund seiner spektralen Absorption (AC) bei der Wellenlänge aus dem vorgegebenen Wellenlänge absorbierten Licht entspricht.

## Beschreibung

Die Erfindung betrifft ein Verfahren und eine Vorrichtung zur Herstellung von Formkörpern, insbesondere von ophthalmischen Linsen wie z.B. Kontaktlinsen, gemäss dem Oberbegriff des jeweiligen unabhängigen Patentanspruchs.

In vielen Herstellungsprozessen von Formkörpern wird Licht eingesetzt, mit dessen Hilfe z.B. chemische Reaktionen ausgelöst werden. Dies gilt insbesondere (aber nicht ausschliesslich) für die Herstellung von Kontaktlinsen, insbesondere für die Herstellung sogenannter "Einmal-Kontaktlinsen", die - wie ihr Name bereits sagt - für einmaliges Tragen vorgesehen sind und die nach dem Tragen weggeworfen werden. Diese Einmal-Kontaktlinsen werden in einem hochautomatisierten Herstellungsprozess mehr oder weniger vollautomatisch hergestellt. Ein solcher Herstellungsprozess ist vom Prinzip her beispielsweise in der WO-A-98/42497 beschrieben.

Bei demjenigen Teil des Herstellungsprozesses, der für die vorliegende Erfindung von besonderer Bedeutung ist, wird das zuvor in die jeweilige Kontaktlinsenform - üblicherweise in die weibliche Formhälfte - eingebrachte Ausgangsmaterial (welches z.B. ein Präpolymer und einen Photoinitiator umfasst) nach dem Schliessen der Form bzw. des Formwerkzeugs, in welchem eine Anzahl von Formen angeordnet sind, mit UV-Licht einer bestimmten Intensität über eine bestimmte Zeitdauer hinweg beaufschlagt. Dadurch erfolgt eine Polymerisation und/oder Vernetzung des Ausgangsmaterials, sodass anschliessend in der Form eine Kontaktlinse enthalten ist, die bei entsprechender Ausgestaltung der Form nicht nachbearbeitet werden muss.

Das von der Lichtquelle - z.B. einer UV-Lampe - emittierte UV-Licht wird beispielsweise gemäss der WO-A-01/00393 mit Hilfe von Lichtleitern zu den einzelnen Formen geführt. Insbesondere kommen dabei Flüssigkeitslichtleiter zum Einsatz, die besonders gute Eigenschaften sowohl im Bezug auf die Transmission von UV-Licht aufweisen als auch in Bezug auf die nutzbare Querschnittsfläche und die homogene Intensitätsverteilung des austretenden UV-Lichts. Vorzugsweise ist dabei jeder Form ein separater Lichtleiter zugeordnet.

Die mit Hilfe der Photoinitiatoren ausgelöste Polymerisation und/oder Vernetzung des Ausgangsmaterials kann durch Begrenzung des einfallenden Lichtbündels, beispielsweise mit Hilfe einer Maske, mit hoher Ortsauflösung gesteuert werden. Kritisch sind die Übergänge von "Licht" zu "Schatten", also der Übergang von Bereichen, die gerade noch mit Licht beaufschlagt werden und wo eine Polymerisation und/oder Vernetzung stattfindet (Kontaktlinsenrand), zu Bereichen, die von der Maske abgeschattet sind und wo folglich keine Polymerisation und/oder Vernetzung stattfindet.

Ein sehr streng paralleles Lichtbündel erzeugt immer eine scharf begrenzte Abbildung der Ränder der Maske und erzeugt somit saubere Kontaktlinsenränder. Allerdings werden dadurch auch Fehler und Verunreinigungen des lichtdurchlässigen Bereichs der Maske in die photochemisch polymerisierte und/oder vernetze Kontaktlinse abgebildet. Ein weniger streng paralleles Lichtbündel ist toleranter gegenüber Maskenfehlern oder Verunreinigungen, allerdings wird damit auch die Randschärfe (Kontaktlinsenrand) kritischer, da der Übergang von "Licht" zu "Schatten" nicht mehr so abrupt ist. Dieser Nachteil kann zumindest teilweise dadurch ausgeglichen werden, dass das Ausgangsmaterial gerade nur mit derjenigen Lichtmenge beaufschlagt wird, die zur vollständigen Polymerisation und/oder Vernetzung erforderlich ist. Diese Schwelle kann durch Zugabe geringer Konzentrationen von Polymerisationsinhibitoren (z.B. radikalische N-Oxide) angehoben werden.

Somit muss das Ausgangsmaterial möglichst genau mit der für eine vollständige Polymerisation und/oder Vernetzung erforderlichen Lichtmenge beaufschlagt werden. Dazu ist es wichtig, die Lichtmenge, mit der das Ausgangsmaterial beaufschlagt wird, genau zu kennen. Zu diesem Zweck wird die Intensität des UV-Lichts gemessen. Dabei ist allerdings zu berücksichtigen, dass Photoinitiatoren eine für sie spezifische spektrale Absorption bei einer bestimmten Wellenlänge aufweisen, die bei einer gegebenen Formulierung nicht geändert werden kann. Ändert sich beispielsweise die mittlere Intensität des eingestrahlten UV-Lichts bei dieser spezifischen Wellenlänge aufgrund von Änderungen der optischen Komponenten (z.B. durch Austausch von Komponenten, Alterung, Chargenschwankungen, etc.), so kann eine zu geringe oder zu grosse Lichtmenge bei der relevanten Wellenlänge kommen, bei welcher der Photoinitiator absorbiert.

Grundsätzlich kann die Menge des Lichts, die vom Photoinitiator absorbiert wird und damit die Polymerisation und/oder Vernetzung auslöst, zwar berechnet werden durch eine Faltung des Anregungsspektrums, welches das Ausgangsmaterial beaufschlagt, mit dem Absorptionsspektrum des Photoinitiators (bzw. genauer gesagt mit dem Rest-Spektrum, welches nicht vom Ausgangsmaterial durchgelassen wird; man ermittelt also das Transmissions-Spektrum und bei Kenntnis des Anregungsspektrums kann daraus das Absorptionsspektrum bestimmt werden). Dazu sind aber Spektrometer erforderlich, die aber für den Einsatz in einem Produktionsprozess nur sehr bedingt geeignet sind. Sie sind nämlich einerseits sehr teuer, andererseits sind sie wenig robust und erfordern für ihre Bedienung qualifiziertes Personal.

In der Praxis werden daher häufig UV-Radiometer eingesetzt, die einen über den gesamten Spektralbereich empfindlichen Photoempfänger (z.B. eine Photodiode) aufweisen sowie ein vorgeschaltetes Filter. Die Filter sind aber nicht sehr aufwändig und erfassen nur einen sehr grob definierten Wellenlängenbereich, der häufig nicht mit der spektralen Absorption des Photoinitiators übereinstimmt, sodass die Messung des UV-Lichts nur eine sehr grobe Orientierung für die tatsächlich wirksame Lichtmenge des Anregungslichts darstellt.

Eine bereits weiter oben angesprochene Änderung (Austausch, Alterung, Chargenschwankungen) von optischen Komponenten (z.B. Lichtquellen, Linsen, Spiegel, Filter, Lichtleiter oder Materialien für Giessformen oder Maskenträger) kann daher zu einer sehr unterschiedlichen spektralen Zusammensetzung des Anregungslichts führen. Ohne genaue Kenntnis der spektralen Veränderung lassen sich aber die Auswirkungen auf den Photoinitiator und auch auf den Photoempfänger nicht vorhersagen. Die unterschiedliche spektrale Empfindlichkeit von Photoempfänger und Photoinitiator beeinträchtigt daher in erheblichem Masse die sichere Beaufschlagung des Ausgangsmaterials mit einer minimalen Lichtmenge, die aus den oben genannten Gründen wünschenswert ist (Randgenauigkeit). Eine wesentlich zu grosse Lichtmenge hingegen kann zu einer Polymer-Degradation und - je nach Wellenlänge - auch zu einer beschleunigten Alterung optischer Komponenten (z.B. von Flüssigkeitslichtleitern) führen.

Hier setzt die vorliegende Erfindung an, der die Aufgabe zugrunde liegt, möglichst genau die jeweilige Lichtmenge des Anregungslichts bei der Wellenlänge der spektralen Absorption des Photoinitiators zu bestimmen, damit im Produktionsprozess immer die relevante Lichtmenge kontrolliert werden kann, nämlich die Lichtmenge, welche bei der Wellenlänge der spektralen Absorption des Photoinitiators das Ausgangsmaterial beaufschlagt.

Diese Aufgabe wird durch ein Verfahren mit den Merkmalen des unabhängigen Verfahrensanspruchs bzw. durch eine Vorrichtung mit den Merkmalen des unabhängigen Vorrichtungsanspruchs gelöst. Vorteilhafte Varianten des Verfahrens bzw. Weiterbildungen der Vorrichtung ergeben sich aus den Merkmalen der abhängigen Ansprüche.

Der Erfindung liegt das grundsätzliche Konzept zugrunde, einen einfachen breitbandigen Photoempfänger sehr genau an die Empfindlichkeit des Photoinitiators anzupassen, sodass bei einer Änderung des Anregungslichts, welches das Ausgangsmaterial mit dem Photoinitiator beaufschlagt, der Photoempfänger diese Änderung "bemerkt", und zwar genau bei der relevanten Wellenlänge, bei welcher der Photoinitiator seine spektrale Absorption hat. Dabei spielt es keine Rolle, wodurch die Änderung des Anregungslichts hervorgerufen wird, es geht zunächst einmal darum, zu kontrollieren, ob die Lichtmenge, die das Ausgangsmaterial beaufschlagt, innerhalb vorgegebener tolerierbarer Grenzen liegt.

Insbesondere wird gemäss der Erfindung also ein Verfahren zur Herstellung von Formkörpern, insbesondere von ophthalmischen Linsen wie z.B. Kontaktlinsen vorgeschlagen, bei dem zur Messung der Intensität des Lichts ein breitbandiger Photoempfänger verwendet wird, welchem ein Filter vorgeschaltet ist, dessen Transmission so ausgebildet ist, dass das durch das Filter hindurch tretende und den Photoempfänger beaufschlagende Licht in seiner Intensität dem vom Photoinitiator aufgrund seiner spektralen Absorption bei der Wellenlänge aus dem vorgegebenen Wellenlängenbereich absorbierten Licht entspricht. Das vorgeschaltete Filter ist also genau so ausgebildet, dass der Photoempfänger das Anregungslicht so "sieht" wie es der Photoinitiator "sieht". Somit erlaubt das Verfahren also stets eine Kontrolle der Lichtmenge des Anregungslichts bei der relevanten Wellenlänge, nämlich bei der Wellenlänge, bei der der Photoinitiator seine spektrale Absorption aufweist.

Das vorstehende Verfahren ist zwar grundsätzlich auch für Licht mit anderen Wellenlängen als solchen im UV-Bereich geeignet, allerdings wird bei der Herstellung von Kontaktlinsen normalerweise UV-Licht eingesetzt, weil die typischerweise zum Einsatz kommenden Photoinitiatoren im UV-Bereich absorbieren.

Bei einer Variante des erfindungsgemässen Verfahrens wird beispielsweise ein Photoinitiator verwendet, der Licht im UV-B-Bereich (ca. 280nm - 320nm) absorbiert. Ferner wird bei dieser Variante ein Tiefpassfilter verwendet, das so ausgebildet und angeordnet ist, dass nur Licht einer Wellenlänge oberhalb der Grenzwellenlänge des Tiefpassfilters das dem Photoempfänger vorgeschaltete Filter bzw. den Photoinitiator im Ausgangsmaterial beaufschlagt, wobei die Grenzwellenlänge des Tiefpassfilters im UV-B-Bereich und unterhalb der Wellenlänge des Beaufschlagungslichts liegt. Das dem Photoempfänger vorgeschaltete Filter ist dabei als Schmalbandfilter mit einer Transmission oberhalb der Grenzwellenlänge des Tiefpassfilters ausgebildet.

Diese Variante ist insofern vorteilhaft, als kurzwelliges Licht, welches zu einer Polymer-Degradation des Kontaktlinsenmaterials und ausserdem auch zu einer beschleunigten Alterung der Flüssigkeitslichtleiter führen kann, durch das Tiefpassfilter von vorne herein blockiert wird.

Ausserdem muss auch nur derjenige Bereich der spektralen Absorption des Photoinitiators durch das dem Photoempfänger vorgeschaltete Filter nachgebildet werden, der oberhalb der Grenzwellenlänge des Tiefpassfilters liegt, da Licht unterhalb dieser Grenzwellenlänge gar nicht das Ausgangsmaterial mit dem Photoinitiator beaufschlagen kann (es wird ja vom Tiefpassfilter geblockt) und daher die Empfindlichkeit des Photoinitiators unterhalb der Grenzwellenlänge des Tiefpassfilters keine Rolle spielt. Das verringert den Aufwand bei der konstruktiven Ausgestaltung des Filters, denn der Photoinitiator absorbiert typischerweise nicht ausschliesslich im UV-B-Bereich sondern teilweise auch noch im UV-C-Bereich. Dieser Bereich muss aber eben nicht mehr durch das Filter "nachgebildet" werden, weil aufgrund des vorgeschalteten Tiefpassfilters kein Licht mehr aus diesem Wellenlängenbereich das Filter bzw. das Ausgangsmaterial mit dem Photoinitiator beaufschlagen kann.

Ausserdem erlaubt diese Variante eine robustere Prozessführung, insbesondere wenn man nämlich eine Lichtquelle verwendet, welche Licht einer Wellenlänge emittiert, die zwar im UV-B-Bereich liegt, also im Absorptionsbereich des Photoinitiators, aber bei einer Wellenlänge, bei der die Absorption des Photoinitiators relativ gering ist. Dann ist nämlich die Zeitdauer der Beaufschlagung des Kontaktlinsenmaterials, das den Photoinitiator enthält, mit Licht nicht so kritisch wie dann, wenn man Licht einer Wellenlänge einstrahlt, bei welcher der Photoinitiator z.B. sein Absorptionsmaximum aufweist. Zu grosse eingestrahlte Lichtmengen (Lichtdosen) können sich nämlich - wie bereits eingangs erwähnt - einerseits auf die Randgenauigkeit der Kontaktlinse auswirken, sodass bei einer Wellenlänge, bei welcher der Photoinitiator einen sehr hohen Absorptionskoeffizienten aufweist, die eingestrahlte kritische Lichtmenge im Hinblick auf Randungenauigkeiten der Linse sehr rasch erreicht sein kann, während dies bei einer Wellenlänge, bei welcher der Photoinitiator einen geringen Absorptionskoeffizienten aufweist, entsprechend weniger zeitkritisch ist. Ausserdem ist auch die Polymerisation/Vernetzung bei einer geringeren Absorption des Photoinitiators über die Dicke des Kontaktlinsenmaterials (Ausgangsmaterial) gleichmässiger, weil ja bei einer geringen Absorption immer nur ein Teil des eingestrahlten Lichts in der obersten "Schicht" des Kontaktlinsenmaterials absorbiert wird und damit immer noch genügend Licht die unteren "Schichten" des Kontaktlinsenmaterials erreichen kann und dort vom Photoinitiator absorbiert werden kann. Durch die auf diese Weise bewirkte gleichmässige Polymerisation/Vernetzung des Kontaktlinsenmaterials (Ausgangsmaterial) können Spannungen in der Kontaktlinse vermieden werden.

Bei einer Variante des erfindungsgemässen Verfahrens wird eine Lichtquelle verwendet, in welcher das Tiefpassfilter baulich integriert ist. Diese Variante ist konstruktiv einfach und stellt sicher, dass stets Licht mit einer Wellenlänge unterhalb der Grenzwellenlänge des Tiefpassfilters abgeblockt wird, sowohl bei der Beaufschlagung des Filters als auch bei der Beaufschlagung des Kontaktlinsenmaterials mit dem Photoinitiator. Bei einer anderen Variante des erfindungsgemässen Verfahrens wird das Tiefpassfilter durch optische Komponenten wie z.B. Linsen gebildet, die aus einem geeigneten Material hergestellt sind. Diese optischen Komponenten sind typischerweise nicht Bestandteil der Lichtquelle.

Bei einer weiteren Variante des erfindungsgemässen Verfahrens wird ein Schmalbandfilter mit mehreren einzelnen Filterelementen verwendet. Dies vereinfacht den konstruktiven Aufbau des Schmalbandfilters, da verschiedene Transmissionscharakteristika einzelner Filterelemente quasi superponiert werden können und es so einfacher ist, die gewünschte Transmission des Filters zu erreichen.

Wie bereits eingangs erwähnt, ist das Verfahren dann besonders vorteilhaft, wenn die Messung der Intensität des Lichts der vorgegebenen Wellenlänge, bei welcher der Photoinitiator absorbiert, während der Herstellung der Formkörper, speziell der Kontaktlinsen, erfolgt. Dadurch ist eine on-line Überwachung der relevanten Lichtmenge, nämlich der Lichtmenge mit der Wellenlänge, bei welcher der Photoinitiator seine spektrale Absorption aufweist, während des Produktionsprozesses möglich.

Weiterhin wird gemäss der Erfindung eine Vorrichtung zur Herstellung von Formkörpern, insbesondere von ophthalmischen Linsen wie z.B. Kontaktlinsen vorgeschlagen, bei welcher zur Messung der Intensität des Lichts ein breitbandiger Photoempfänger vorgesehen ist. Diesem breitbandigen Photoempfänger ist ein Filter vorgeschaltet, dessen Transmission so ausgebildet ist, dass das durch das Filter hindurch tretende und den Photoempfänger beaufschlagende Licht in seiner Intensität dem vom Photoinitiator aufgrund seiner spektralen Absorption bei der Wellenlänge aus dem vorgegebenen Wellenlängenbereich absorbierten Licht entspricht. Die Vorteile des jeweiligen Ausführungsbeispiels der erfindungsgemässen Vorrichtung entsprechen jeweils den Vorteilen, die bei den entsprechenden Verfahrensvarianten genannt sind.

So umfasst bei einem Ausführungsbeispiel der erfindungsgemässen Vorrichtung die Einrichtung zur Beaufschlagung mit Licht des in der Form befindlichen Ausgangsmaterials mit einem Photoinitiator, der im UV-Bereich absorbiert, eine UV-Lichtquelle.

Bei einem weiteren Ausführungsbeispiel der erfindungsgemässen Vorrichtung ist für einen Photoinitiator mit einer Absorption im UV-B-Bereich ein Tiefpassfilter vorgesehen, welches so ausgebildet und angeordnet ist, dass nur Licht einer Wellenlänge oberhalb einer Grenzwellenlänge des Tiefpassfilters das dem Photoempfänger vorgeschaltete Filter bzw. den Photoinitiator im Ausgangsmaterial beaufschlagt. Das dem Photoempfänger vorgeschaltete Filter ist als Schmalbandfilter mit einer Transmission oberhalb der Grenzwellenlänge des Tiefpassfilters ausgebildet. Die Vorteile dieses Ausführungsbeispiels im Hinblick auf die einfachere konstruktive Ausbildung des Filters bzw. auf die Robustheit des Prozesses für den Fall, dass die Lichtquelle Licht mit einer Wellenlänge emittiert, bei welcher der Photoinitiator zwar absorbiert, jedoch nur einen geringen Absorptionskoeffizienten aufweist, sind bereits bei der entsprechenden Verfahrensvariante erläutert worden.

Bei einem weiteren Ausführungsbeispiel der erfindungsgemässen Vorrichtung kann die Einrichtung zur Beaufschlagung des Ausgangsmaterials mit Licht eine Lichtquelle umfassen, in welcher das Tiefpassfilter baulich integriert ist. Bei einem anderen Ausführungsbeispiel der erfindungsgemässen Vorrichtung können optische Komponenten wie z.B. Linsen als Tiefpassfilter vorgesehen sein, welche aus einem geeigneten Material hergestellt sind. Die entsprechenden Vorteile dieser Ausführungsbeispiele sind bereits ebenfalls bei der entsprechenden Verfahrensvariante erläutert worden.

Dies gilt in gleicher Weise für ein Ausführungsbeispiel der erfindungsgemässen Vorrichtung, bei welcher das Schmalbandfilter mehrere einzelne Filterelemente umfasst.

Schliesslich ist bei einem weiteren Ausführungsbeispiel der erfindungsgemässen Vorrichtung die Einrichtung zur Messung der Intensität des Lichts so ausgebildet und angeordnet ist, dass die Intensitätsmessung während der Herstellung der Formkörper erfolgt.

Weitere vorteilhafte Aspekte des erfindungsgemässen Verfahrens bzw. der erfindungsgemässen Vorrichtung ergeben sich aus der nachfolgenden Erläuterung von Ausführungsbeispielen der Erfindung mit Hilfe der Zeichnung. Es zeigen:
- Fig. 1: ein Ausführungsbeispiel eines zyklischen, getakteten Prozesses zur Herstellung von Kontaktlinsen,
- Fig. 2-4: ein Ausführungsbeispiel eines Formwerkzeugs zur Herstellung von Kontaktlinsen, in geöffnetem Zustand sowie nach dem Schliessen des Formwerkzeugs,
- Fig. 5: ein Ausführungsbeispiel der Art und Weise der Einkopplung des Lichts von einer UV-Lampe in einen Lichtleiter,
- Fig. 6: ein Ausführungsbeispiel der Art und Weise des Austritts des Lichts aus dem Lichtleiter und der Beaufschlagung der Form,
- Fig. 7: ein Ausführungsbeispiel einer Einrichtung zur Beaufschlagung des in der Form befindlichen Ausgangsmaterials mit UV-Licht,
- Fig. 8: ein Ausführungsbeispiel eines geschlossenen Formwerkzeugs auf einer Grundplatte zum Transport des Formwerkzeugs unter den Lichtaustrittsenden von Lichtleitern hindurch, sowie eine entsprechende Messeinrichtung zur Messung der Intensität des aus den Lichtleitern austretenden Lichts,
- Fig. 9: ein Ausführungsbeispiel des Sensors der Messeinrichtung in Explosionsdarstellung,
- Fig. 10: den Sensor aus Fig. 9 im Zusammenbau,
- Fig. 11: ein Beispiel für die einzelnen Transmissionskurven dreier Filterelemente des Filters des Sensors
und
- Fig. 12: die Überlagerung der Transmissionskurven der Filterelemente aus Fig. 11 neben der "Absorptionskurve" ([1-T]-Spektrum) des Photoinitiators.

Die nachfolgende Erläuterung bezieht sich auf ein Ausführungsbeispiel eines Verfahrens zur Herstellung von Kontaktlinsen. Das erfindungsgemässe Verfahren ist besonders geeignet für die Herstellung von Kontaktlinsen, soll aber weder auf die Herstellung von Kontaktlinsen beschränkt sein, noch auf den zyklischen, getakteten Prozess, der beispielhaft nachfolgend genauer erläutert wird.

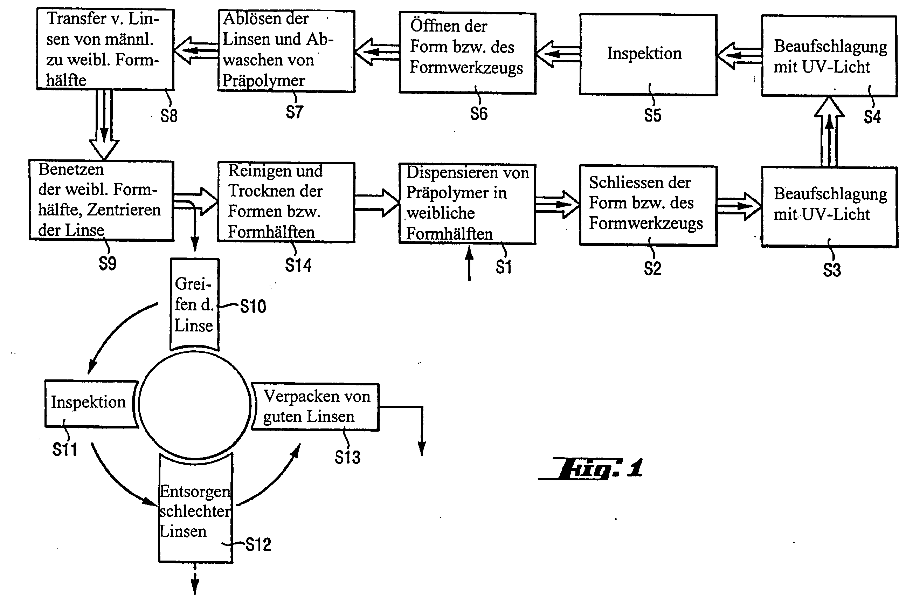

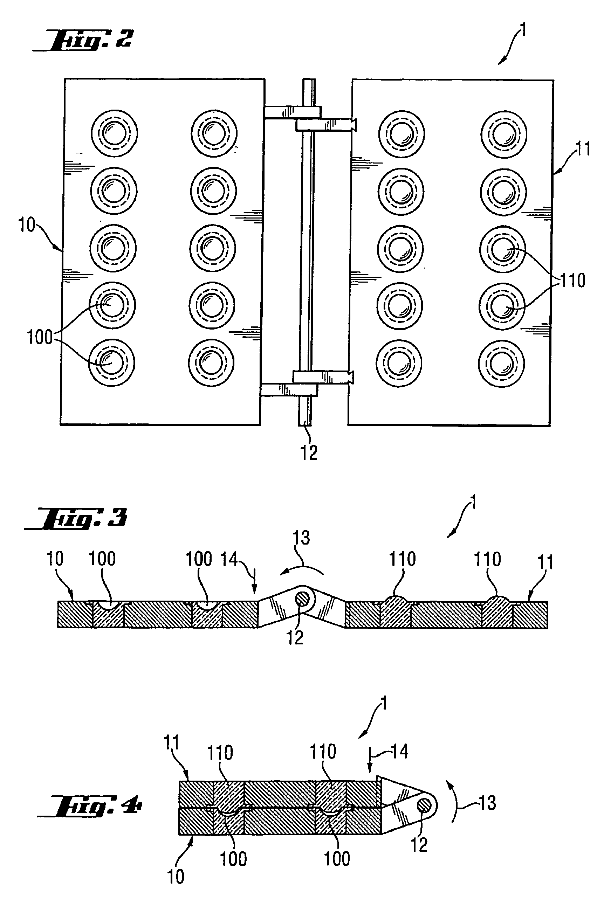

Wie bereits erwähnt, erkennt man in Fig. 1 ein Ausführungsbeispiel eines zyklischen getakteten Prozesses zur Herstellung von Kontaktlinsen. In einem ersten Schritt S1 dieses zyklischen getakteten Prozesses wird das Ausgangsmaterial, z.B. das eingangs schon erwähnte Präpolymer, in die weibliche Formhälfte oder in mehrere weibliche Formhälften dispensiert. Beispielsweise kann ein Formwerkzeug 1 zum Einsatz kommen, wie es in Fig. 2 dargestellt ist, mit zwei Werkzeughälften 10 und 11. In der einen Werkzeughälfte 10 ist eine Anzahl von weiblichen Formhälften 100, z.B. zehn solcher weiblichen Formhälften 100, angeordnet. In der anderen Werkzeughälfte 11 ist eine der Anzahl der weiblichen Formhälften 100 entsprechende Anzahl männlicher Formhälften 110, im dargestellten Fall zehn männliche Formhälften 110, angeordnet.

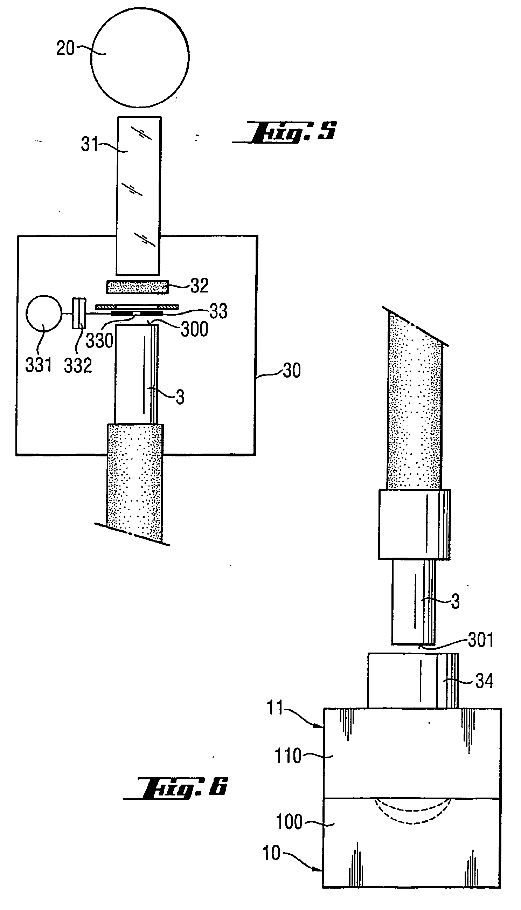

Im nachfolgenden Schritt S2 wird das Formwerkzeug 1 geschlossen, wobei das Schliessen zunächst durch eine Schwenkbewegung der Formhälfte 11 um die Achse 12 herum, wie durch den Pfeil 13 in Fig. 3 angedeutet, und anschliessend durch eine geradlinige Bewegung, wie durch den Pfeil 14 in Fig. 3 angedeutet, erfolgt. Das Formwerkzeug 1 befindet sich dann im geschlossenen Zustand, wie es in Fig. 4 dargestellt ist.

Die männlichen Formhälften 110 bzw. die relevanten Teile davon sind für UV-Licht transparent. In einem dritten Schritt S3 wird sodann das in der Kavität - also in dem Raum zwischen der männlichen Formhälfte 110 und der weiblichen Formhälfte 100 - befindliche Ausgangsmaterial (Präpolymer) mit UV-Licht beaufschlagt, was eine Polymerisation und/oder Vernetzung des Ausgangsmaterials zur Folge hat. In einem vierten Schritt S4 erfolgt noch einmal der gleiche Vorgang. Dass man zwei Belichtungsschritte S3 und S4 bzw. Belichtungsstationen wählt, hat vor allen Dingen damit zu tun, dass durch diese Massnahme die Taktzeit des zyklischen Prozesses verkürzt werden kann. Der langsamste Schritt bestimmt nämlich im Prinzip die Taktzeit. Andererseits ist es erforderlich, das Ausgangsmaterial für eine bestimmte Zeitdauer mit UV-Licht einer bestimmten Intensität zu beaufschlagen, um eine ausreichende Polymerisation und/oder Vernetzung des Ausgangsmaterials zu gewährleisten.

In einem anschliessenden Schritt S5 wird bei noch geschlossenem Formwerkzeug 1 eine erste Inspektion der noch in den Formen befindlichen Kontaktlinsen durchgeführt. In diesem Schritt S5 kann beispielsweise der zentrale Bereich der Kontaktlinsen auf Einschlüsse oder sonstige gröbere gut erkennbare Fehler hin untersucht werden.

Im daran anschliessenden Schritt S6 wird das Formwerkzeug 1 wieder geöffnet, was in umgekehrter Reihenfolge erfolgt wie der Schliessvorgang des Formwerkzeugs, der im Schritt S2 beschrieben wurde.

Im nächsten Schritt S7 werden die männlichen und weiblichen Formhälften 110,100 z.B. mit Wasser besprüht, um ein Ablösen der Kontaktlinsen zu bewirken und andererseits überschüssiges nicht vernetztes Präpolymer von der Kontaktlinse und/oder der Formhälfte abzuwaschen.

Im nachfolgenden Schritt S8 findet ein automatischer Transfer der Kontaktlinsen von der männlichen Formhälfte 110 zur weiblichen Formhälfte 100 statt. In vielen Fällen verbleibt beim Öffnen des Formwerkzeugs 1 zwar die Kontaktlinse bereits in der weiblichen Formhälfte 100, in der Mehrzahl der Fälle bleibt sie jedoch an der männlichen Formhälfte 110 haften. Da aber für die nachfolgenden automatisierten Schritte sicher gestellt werden muss, dass die Kontaktlinse sich in der weiblichen Formhälfte 100 befindet, wird im Schritt S8 ein automatischer Transfer der Kontaktlinsen von der männlichen zur weiblichen Formhälfte durchgeführt. In denen Fällen, in denen sich die Kontaktlinse bereits in der weiblichen Formhälfte befindet, wird zwar der Versuch eines Transfers unternommen, da aber in diesen Fällen die Kontaktlinse sich bereits in der weiblichen Formhälfte befindet, findet kein Transfer statt. Nach Schritt S8 ist jedenfalls sicher gestellt, dass sich die Kontaktlinsen in der weiblichen Formhälfte befinden.

Im Schritt S9 werden die weiblichen Formhälften 100 benetzt, beispielsweise mit Wasser, was eine Zentrierung der Kontaktlinse in der weiblichen Formhälfte 100 erleichtert, weil die Kontaktlinse auf diese Weise leichter in das Zentrum der weiblichen Formhälfte 100 gleiten kann. Die Zentrierung der Linse ist wiederum für den nachfolgenden Schritt S10 von Bedeutung, weil in diesem Schritt die Kontaktlinse aus der weiblichen Formhälfte ergriffen wird.

Während die ergriffenen Kontaktlinsen in einem zyklischen (Neben-)Prozess nach dem im Schritt S10 erfolgten Ergreifen in einem Schritt S11 inspiziert werden, insbesondere auch daraufhin, ob der Kontaktlinsenrand einwandfrei ist, werden die nicht einwandfreien Kontaktlinsen in einem Schritt S12 entsorgt. Die einwandfreien Kontaktlinsen hingegen werden in einem Schritt S13 in eine Verpackung eingebracht, die gegebenenfalls eine Aufbewahrungslösung (z.B. Saline) enthalten kann.

Nachdem die Kontaktlinsen im Schritt S10 aus den weiblichen Formhälften 100 entnommen worden sind, kann das Formwerkzeug 1 bzw. die in den Werkzeughälften 10 und 11 angeordneten Formhälften 100 und 110 in dem zyklischen (Haupt-)Prozess in einem Schritt S14 z.B. mit Wasser gereinigt werden und anschliessend kann der zyklische (Haupt)Prozess wieder mit dem Schritt S1, dem Dispensieren von Präpolymer in die weiblichen Formhälften 100, einen erneuten Durchlauf beginnen.

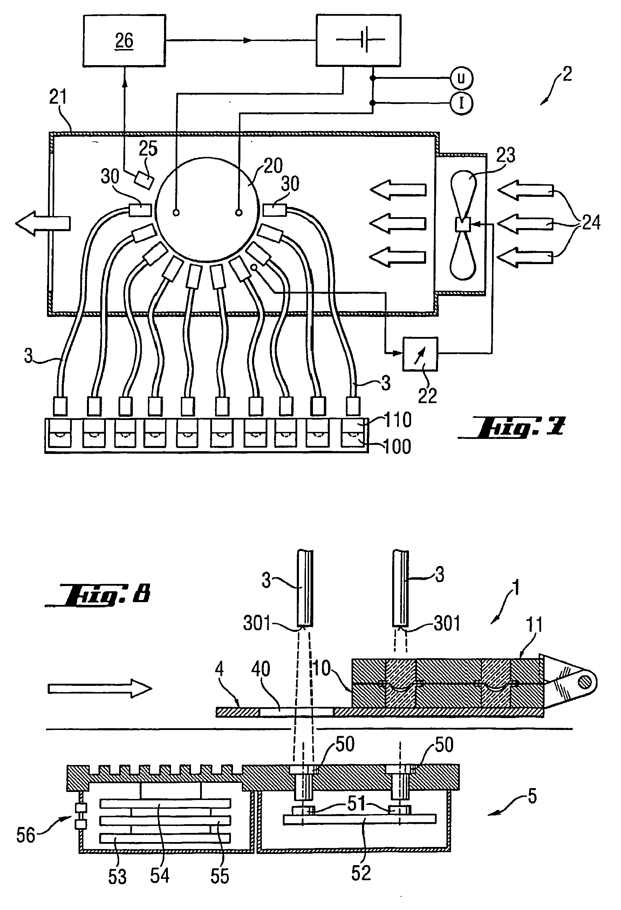

In Fig. 7 ist eine Einrichtung 2 zur Beaufschlagung des in der Form befindlichen Ausgangsmaterials mit UV-Licht-zu erkennen, das in dem zuvor beschriebenen Herstellungsprozess in den Schritten S3 und S4 bei der Beaufschlagung des Ausgangsmaterials mit UV-Licht zwecks Polymerisation und/oder Vernetzung des Ausgangsmaterials zum Einsatz gelangen kann. Die Einrichtung 2 umfasst eine (wechselspannungs- bzw. wechselstrom-betriebene) UV-Lampe 20, welche in einem Gehäuse 21 angeordnet ist. Mehrere Lichtleiter 3 - hier zum Beispiel zehn Stück - sind vorgesehen, die mit Hilfe jeweils eines Halters 30 um die UV-Lampe 20 herum angeordnet sind und das von der Lampe 20 emittierte Licht zu den einzelnen Formen transportieren, die hier der besseren Übersichtlichkeit halber alle nebeneinander angeordnet dargestellt sind. Die Lichtleiter 3 werden im folgenden noch etwas detaillierter beschrieben.

Ferner erkennt man in Fig. 7 noch einen Temperatursensor 22, welcher die Temperatur nahe der Oberfläche der UV-Lampe 20 misst und beim Überschreiten einer bestimmten Temperatur einen Ventilator 23 ansteuert, welcher Kühlluft 24 ansaugt und durch das Gehäuse 21 hindurch führt. Ausserdem kann ein Sensor 25 zur Messung der Intensität des UV-Lichts vorgesehen sein, welcher ein entsprechendes Signal an eine Steuerung 26 weiterleitet, die die UV-Lampe 20 so einstellt, dass eine bestimmte Soll-Intensität des UV-Lichts als generelle Vorgabe gegeben ist.

In Fig. 5 ist ein Ausführungsbeispiel der Art und Weise der Einkopplung des Lichts von einer UV-Lampe 20 in das Lichteintrittsende 300 eines Lichtleiters 3 dargestellt, welcher dann das UV-Licht zu der jeweiligen Form leitet. Die gesamte Zuleitung zum Transport des UV-Lichts von der UV-Lampe 20 umfasst neben dem eigentlichen Lichtleiter 3 noch einen Quarzstab 31, ein Filter 32 (Tiefpassfilter), sowie eine motorisch verstellbare Blende 33. Die Grösse der Blendenöffnung 330 ist dabei mittels eines Motors 331 und einer flexiblen Kopplung 332 verstellbar. Im Lichtweg nach der Blende 33 ist der Lichtleiter 3 angeordnet, der hier als Flüssigkeitslichtleiter ausgebildet ist. Flüssigkeitslichtleiter sind besonders geeignet, um UV-Licht zu leiten, vertragen aber nicht so hohe Temperaturen, wie sie in der unmittelbaren Umgebung der UV-Lampe 20 herrschen. Aus diesem Grunde ist der Quarzstab 31 vorgesehen, der zwar nicht flexibel ist, der dafür aber die Temperaturen in unmittelbarer Umgebung der UV-Lampe 20 verträgt und auch UV-Licht gut leitet. In dem Halter 30 findet also die zuvor beschriebene Einkopplung des UV-Lichts in den jeweiligen Lichtleiter 3 statt, der dann das UV-Licht zu der jeweiligen Form führt. Das Tiefpassfilter 32 blockt dabei Lichtanteile unterhalb einer Grenzwellenlänge ab, vorzugsweise UV-Licht mit einer kürzeren Wellenlänge als der UV-B-Bereich, in welchem z.B. die Photoinitiatoren absorbieren, die in dem Präpolymer zum Auslösen der Vernetzung und/oder Polymerisation dienen. Ein solches Tiefpassfilter32 direkt vor der Einkopplung in die Flüssigkeitslichtleiter (also als integraler Bestandteil der Lichtquelle) ist schon deshalb vorteilhaft, weil einerseits die abgeblockten kurzen Wellenlängen zu einer beschleunigten Alterung der Flüssigkeitslichtleiter 3 führen können, andererseits das Tiefpassfilter 32 durch das Abblocken der kurzen Wellenlängen auch eine Polymer-Degradation des Kontaktlinsenmaterials verhindert, sofern die Flüssigkeitslichtleiter dieses Licht überhaupt passieren lassen.

In Fig. 6 ist ein Ausführungsbeispiel der Art und Weise des Austritts des UV-Lichts aus dem Lichtleiter 3 und der Beaufschlagung der Form zu erkennen. Das aus dem Lichtaustrittsende 301 des Lichtleiters 3 austretende UV-Licht beaufschlagt - hier durch einen Kondensor 34 hindurch - das in der Form zwischen der männlichen Formhälfte 110 und der weiblichen Formhälfte 100 befindliche Ausgangsmaterial, sodass eine Kontaktlinse gebildet wird, wie sie in Fig. 6 gestrichelt dargestellt ist. Grundsätzlich ist es auch denkbar, dass die optischen Elemente wie z.B. die Linsen des Kondensors 34 aus einem geeigneten Material hergestellt sind und als Tiefpassfilter wirken. Allerdings wird auf diese Weise nicht die Alterung der Flüssigkeitslichtleiter verhindert, weil die Ausblendung des kurzwelligen UV-Lichts eben erst nach dem Durchlaufen des Flüssigkeitslichtleiters erfolgt.

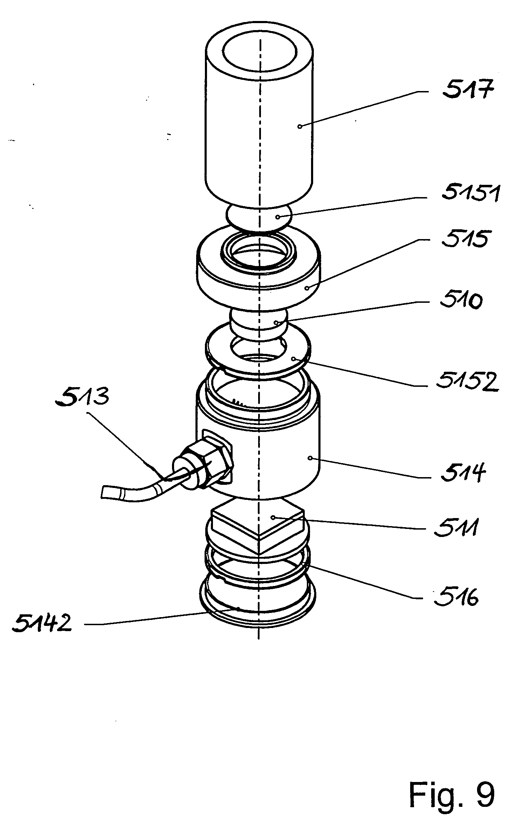

In Fig. 8 ist ein Ausführungsbeispiel eines geschlossenen Formwerkzeugs 1 mit den Formhälften 10 und 11 auf einer Grundplatte 4 zum Transport des Formwerkzeugs 1 unter den Lichtaustrittsenden von Lichtleitern 3 hindurch, sowie eine entsprechende Messeinrichtung 5 zur Messung der Intensität des aus den Lichtleitern 3 austretenden UV-Lichts. Die Lichtleiter 3 sind so angeordnet, dass in der Ruhestellung der Grundplatte 4 innerhalb eines Takts das austretende UV-Licht durch die in der Werkzeughälfte 11 angeordnete männliche Formhälfte 110 hindurch das Ausgangsmaterial beaufschlagt. Während des Abtransports der Grundplatte 4 mitsamt dem Formwerkzeug 1 nach dem Belichten kommt ein in der Grundplatte 4 vorgesehener Spalt 40 zwischen die Lichtleiter 3 und die Messeinrichtung 5 zu liegen (dies könnte alternativ natürlich bei entsprechender Gestaltung der Grundplatte 4 - Anordnung des Spalts 40 - auch beim Hintransport erfolgen). Das aus den Lichtaustrittsenden 301 der Lichtleiter 3 austretende UV-Licht beaufschlagt dann z.B. durch Abschwächer 50 hindurch lichtempfindliche Sensoren 51, die auf einer Detektorplatte 52 angeordnet sind. Während der Ruhestellung der Grundplatte 4 - also während der Beaufschlagung des Ausgangsmaterials in der Form mit UV-Licht innerhalb eines Takts - wird das durch die in der Werkzeughälfte 10 angeordnete weibliche Formhälfte 100 durchgehende UV-Licht ebenfalls von der Messeinrichtung 5 empfangen. Da dieses transmittierte Licht aber für eine Intensitätsmessung nur mit Einschränkung brauchbar ist, kann es beispielsweise dafür verwendet werden, die Form auf Verschmutzungen etc. hin zu prüfen. Ferner umfasst die Messeinrichtung 5 noch einen Elektronikteil, in welchem eine Hauptplatine 53, eine Verarbeitungsplatine 54 und eine Analog/Digital-Platine 55 vorgesehen sind. An der Frontplatte 56 können insbesondere ein Netzwerkanschluss (z.B. Ethernet), eine serielle Schnittstelle (z.B. RS 232) sowie ein Anschluss zur Spannungsversorgung vorgesehen sein, ferner eine Übertragung von Daten und/oder Steuersignalen an die Systemprozesssteuerung (SPS) und eine Statusanzeige des Geräts.

Wie die Intensität und daraus die Lichtmenge grundsätzlich gemessen werden kann, ist beispielsweise in der EP-A-1,314,527 genauer beschrieben und braucht daher an dieser Stelle nicht näher erläutert zu werden.

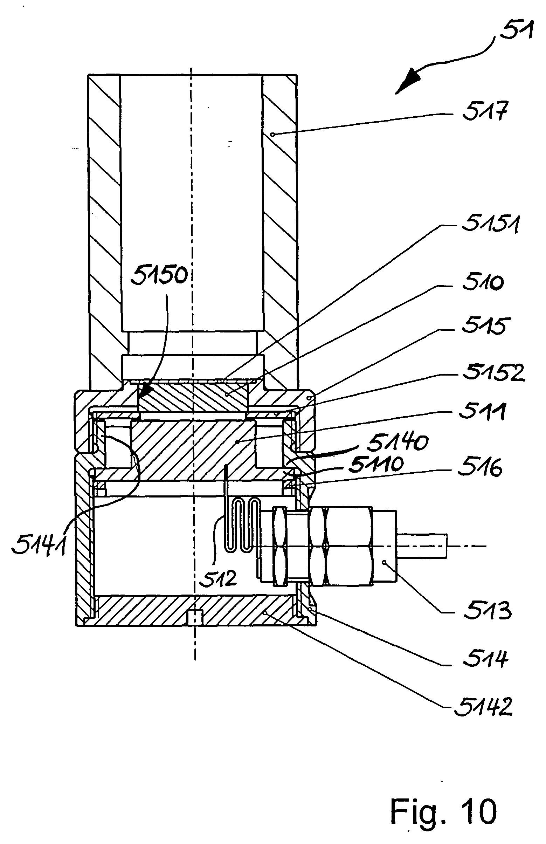

Die bereits in Fig. 8 angesprochenen lichtempfindlichen Sensoren 51 können auf verschiedene Arten ausgebildet sein. Ein Ausführungsbeispiel für einen solchen Sensor 51 ist in Fig. 9 in einer Explosionsdarstellung und in Fig. 10 im Zusammenbau dargestellt. Wesentlichen Bestandteile des Sensors sind ein Filter, hier als Filterpaket 510 ausgebildet, sowie ein breitbandiger Photoempfänger, hier in Form einer Sensorleiterplatte 511. Die Sensorleiterplatte 511 ist über ein internes Kabel 512 mit einem festen Anschluss 513 (z.B. BNC-Buchse) für ein externes Kabel (z.B. Koaxialkabel) verbunden, der in einem Sensorgehäuse 514 angeordnet ist.

Das Sensorgehäuse 514 ist mit einem nach innen vorstehenden umlaufenden Vorsprung 5140 versehen, an welchem im montierten Zustand (Fig. 10) eine Anschlagfläche 5110 der Sensorleiteplatte 511 anliegt und von einem Klemmring 516 gehalten wird. Der Klemmring 516 ist mit einem Aussengewinde versehen. Zur Montage wird die Sensorleiterplatte 511 in das Sensorgehäuse 514 eingesetzt und der Klemmring 516 in das Innengewinde des Sensorgehäuses 514 eingeschraubt, bis er die bereits angesprochene Anschlagfläche 5110 der Sensorleiterplatte 511 gegen den Vorsprung 5140 klemmt. Das Sensorgehäuse 514 weist ferner an seinem oberen Ende einen zylindrischen Fortsatz 5141 auf, der mit einem Aussengewinde versehen ist. Am Boden ist das Sensorgehäuse 514 durch einen einschraubbaren Deckel 5142 verschlossen.

Ferner umfasst der Sensor 51 ein Filtergehäuse 515, in welchem das Filterpaket 510 angeordnet ist. Das Filterpaket 510 ist in einer Öffnung 5150 angeordnet, die von oben her mit einer Glasabdeckung 5151 verschlossen abgeschlossen ist. Das Filtergehäuse 515 ist ebenfalls mit einem Innengewinde versehen. In dieses Innengewinde ist ein Filterklemmring 5152 eingeschraubt, welcher von unten her das Filterpaket 510 am gewünschten Ort fixiert. Das mit dem fixierten Filterpaket vormontierte Filtergehäuse 515 wird dann auf das Aussengewinde auf dem zylindrischen Fortsatz 5141 des Sensorgehäuses 514 aufgeschraubt.

Auf einem zylindrischen Fortsatz 5153 des Filtergehäuses 515 ist noch eine Hülse 517 aufgesetzt, welche identisch mit der Hülse ist, in welcher bei der Herstellung der Kontaktlinsen z.B. die männliche Formhälfte aufgenommen ist, durch die hindurch dann das Kontaktlinsenmaterial mit Licht beaufschlagt wird.

Das beschriebene Ausführungsbeispiel des Sensors 51 ist - wie bereits erwähnt - aber nur ein Ausführungsbeispiel, wie ein solcher Sensor ausgebildet sein kann. Ebenso gut ist es vorstellbar, eine entsprechenden Sensor zu verwenden, wie er beispielsweise mit Hilfe der Fig. 8 bis 10 und der zugehörigen Beschreibung in der EP-A-1,314,527 offenbart ist und hierdurch ausdrücklich zum Bestandteil der Erfindung erklärt wird.

Photoinitiatoren, wie sie beispielsweise bei den beschriebenen Präpolymeren zum Einsatz kommen, wie sie beispielsweise in der EP-A-0 790 258 beschrieben sind, absorbieren signifikant noch im Bereich oberhalb 300 nm, auch wenn das Absorptionsmaximum deutlich unter 300 nm liegt.. Die Sensorleiterplatte 511, die hier als Photoempfänger dient, ist breitbandig empfindlich, d.h. sie ist mindestens über den Wellenlängenbereich des ultravioletten Lichts und häufig auch noch über den Wellenlängenbereich des sichtbaren Lichts empfindlich. Allerdings soll ja der Sensor möglichst genau das Verhalten des Photoinitiators nachbilden, der aber nur bei einer spezifischen Wellenlänge im langwelligen UV-Bereich absorbiert.

Aus diesem Grunde umfasst das als Filter fungierende Filterpaket 510 vorzugsweise mehrere Filterelemente, die in verschiedenen Wellenlängenbereichen eine unterschiedliche Transmission aufweisen. Durch Superposition der Transmissionscharakteristiken der einzelnen Filterelemente kann man das gewünschte Schmalbandfilter erreichen. Das Filter - hier das Filterpaket 510 - kann also insgesamt drei Filterelemente umfassen, um eine möglichst exakte Nachbildung dessen zu erhalten, wie der Photoinitiator das Licht "sieht", welches ihn dann im Präpolymer (Ausgangsmaterial) beaufschlagt.

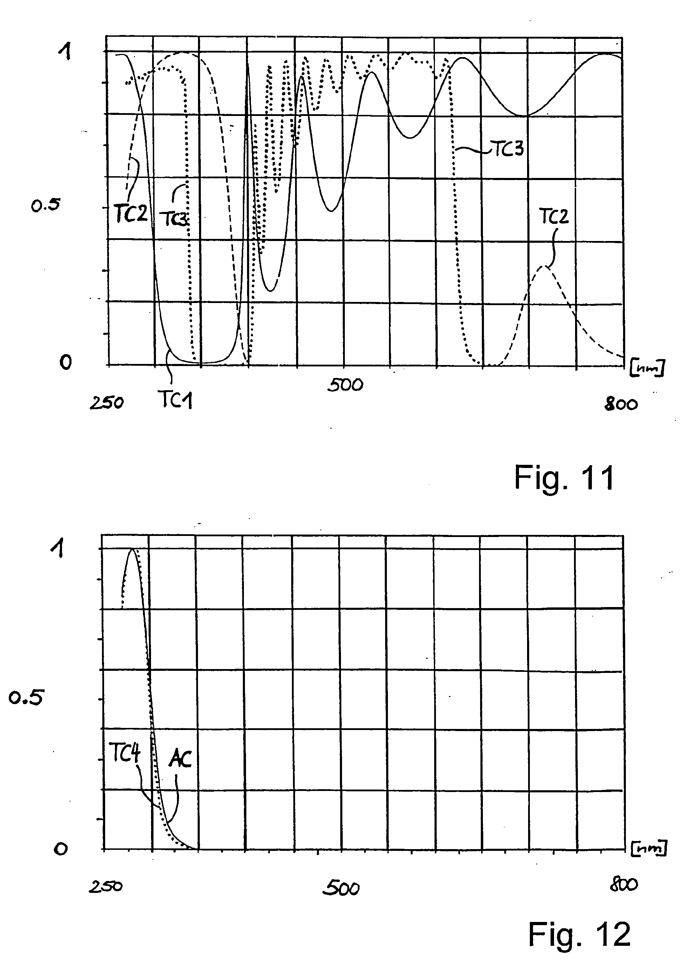

Ein Beispiel für die Transmissionskurven der einzelnen Filterelemente kann man aus Fig. 11 entnehmen, wobei die Abszisse die Wellenlänge in nm darstellt und die Ordinate die normierte Transmission der einzelne Filterelemente (0 = undurchlässig, 1 = durchlässig). Die einzelnen Transmissionskurven sind in einer durchgezogenen Kurve TC1, einer gestrichelten Kurve TC2 und einer punktierten Kurve TC3 dargestellt.

Die Überlagerung dieser Transmissionskurven neben der "Absorptionskurve" ([1-T] - Kurve, T = Transmission) des Photoinitiators ist aus Fig. 12 ersichtlich. Die Abszisse stellt wieder die Wellenlänge in nm dar und die Ordinate die normierte Transmission TC4 des Filters (Superposition der Transmission der der einzelnen Filterelemente gemäss Fig. 11), die in einer punktierten Kurve dargestellt ist, bzw. die normierte Absorption AC des Photoinitiators, die in einer durchgezogenen Kurve dargestellt ist (zur Erinnerung: Das Filter muss möglichst genau eine Transmission aufweisen, die der Absorption des Photoinitiators entspricht, damit der Photoempfänger das transmittierte Licht genau so "sieht" wie der Photoinitiator).

## Patentansprüche

1. Verfahren zur Herstellung von Formkörpern, insbesondere von ophthalmischen Linsen wie z.B. Kontaktlinsen, bei welchem ein Ausgangsmaterial, welches einen Photoinitiator mit einer spektralen Absorption (AC) in einem vorgegebenen Wellenlängenbereich enthält, mit einer vordefinierten Menge von Licht einer Wellenlänge aus dem vorgegebenen Wellenlängenbereich beaufschlagt wird, wodurch eine Polymerisation und/oder Vernetzung des Ausgangsmaterials ausgelöst und auf diese Weise ein entformbarer Formkörper gebildet wird, und bei welchem Verfahren die Intensität des Lichts gemessen wird, **dadurch gekennzeichnet, dass** zur Messung der Intensität des Lichts ein breitbandiger Photoempfänger (511) verwendet wird, welchem ein Filter (510) vorgeschaltet ist, dessen Transmission (TC1,TC2,TC3;TC4) so ausgebildet ist, dass das durch das Filter (510) hindurch tretende und den Photoempfänger (511) beaufschlagende Licht in seiner Intensität dem vom Photoinitiator aufgrund seiner spektralen Absorption (AC) bei der Wellenlänge aus dem vorgegebenen Wellenlängenbereich absorbierten Licht entspricht.

2. Verfahren nach Anspruch 1, bei welchem ein Photoinitiator verwendet wird, der Licht im UV-Bereich absorbiert und bei welchem das Licht UV-Licht ist.

3. Verfahren nach Anspruch 2, bei welchem ein Photoinitiator verwendet wird, der Licht im UV-B-Bereich absorbiert, und bei welchem ein Tiefpassfilter (32,34)verwendet wird, welches so ausgebildet und angeordnet ist, dass nur Licht einer Wellenlänge oberhalb einer Grenzwellenlänge des Tiefpassfilters das dem Photoempfänger (511) vorgeschaltete Filter (510) bzw. den Photoinitiator im Ausgangsmaterial beaufschlagt, wobei die Grenzwellenlänge des Tiefpassfilters (32,34) innerhalb des UV-B-Bereichs und unterhalb der Wellenlänge des Beaufschlagungslichts liegt, und bei welchem das dem Photoempfänger (511) vorgeschaltete Filter (510) als Schmalbandfilter mit einer Transmission oberhalb der Grenzwellenlänge des Tiefpassfilters (32,34) ausgebildet ist.

4. Verfahren nach Anspruch 3, bei welchem eine Lichtquelle (20) verwendet wird, in welcher das Tiefpassfilter (32) baulich integriert ist.

5. Verfahren nach Anspruch 3, bei welchem das Tiefpassfilter durch optische Komponenten (34) wie z.B. Linsen gebildet wird, die aus einem geeigneten Material hergestellt sind.

6. Verfahren nach einem der Ansprüche 3 bis 5, bei welchem ein Schmalbandfilter mit mehreren einzelnen Filterelementen verwendet wird.

7. Verfahren nach einem der vorangehenden Ansprüche, bei welchem eine Lichtquelle (20) verwendet wird, welche Licht mit einer Wellenlänge emittiert, bei welcher der Photoinitiator zwar absorbiert, jedoch nur einen geringen Absorptionskoeffizienten aufweist.

8. Verfahren nach einem der vorangehenden Ansprüche, bei welchem die Messung der Intensität des Lichts der vorgegebenen Wellenlänge während der Herstellung der Formkörper erfolgt.

9. Vorrichtung zur Herstellung von Formkörpern, insbesondere von ophthalmischen Linsen wie z.B. Kontaktlinsen, mit einer Form (100,110), sowie mit einer Einrichtung zum Einbringen eines Ausgangsmaterials in die Form, wobei das Ausgangsmaterial einen Photoinitiator mit einer spektralen Absorption (AC) in einem vorgegebenen Wellenlängenbereich enthält, ferner mit einer Einrichtung (2) zur Beaufschlagung des in der Form befindlichen Ausgangsmaterials mit einer vordefinierten Menge von Licht einer Wellenlänge aus dem vorgegebenen Wellenlängenbereich , in welchem der Photoinitiator absorbiert, was eine Polymerisation und/oder Vernetzung des Ausgangsmaterials auslöst, sodass ein entformbarer Formkörper entsteht, und schliesslich mit einer Einrichtung (5) zur Messung der Intensität des Lichts, **dadurch gekennzeichnet, dass** zur Messung der Intensität des emittierten Lichts ein breitbandiger Photoempfänger (511) vorgesehen ist, welchem ein Filter (510) vorgeschaltet ist, dessen Transmission (TC1,TC2,TC3;TC4) so ausgebildet ist, dass das durch das Filter (510) hindurch tretende und den Photoempfänger (511) beaufschlagende Licht in seiner Intensität dem vom Photoinitiator aufgrund seiner spektralen Absorption (AC) bei der Wellenlänge aus dem vorgegebenen Wellenlängenbereich absorbierten Licht entspricht.

10. Vorrichtung nach Anspruch 9, bei welcher die Einrichtung (2) zur Beaufschlagung mit Licht des in der Form befindlichen Ausgangsmaterials mit einem Photoinitiator, der im UV-Bereich absorbiert, eine UV-Lichtquelle (20) umfasst.

11. Vorrichtung nach Anspruch 10, bei welcher für einen Photoinitiator mit einer Absorption (AC) innerhalb des UV-B-Bereichs ein Tiefpassfilter (32,34) vorgesehen ist, welches so ausgebildet und angeordnet ist, dass nur Licht einer Wellenlänge oberhalb einer Grenzwellenlänge des Tiefpassfilters (32,34) das dem Photoempfänger (511) vorgeschaltete Filter (510) bzw. den Photoinitiator im Ausgangsmaterial beaufschlagt, wobei die Grenzwellenlänge des Tiefpassfilters innerhalb des UV-B-Bereichs und unterhalb der Wellenlänge des Beaufschlagungslichts liegt, und bei welcher das dem Photoempfänger (511) vorgeschaltete Filter (510) als Schmalbandfilter mit einer Transmission oberhalb der Grenzwellenlänge des Tiefpassfilters ausgebildet ist.

12. Vorrichtung nach Anspruch 11, bei welcher die Einrichtung zur Beaufschlagung des Ausgangsmaterials mit Licht eine Lichtquelle (20) umfasst, in welcher das Tiefpassfilter (32) baulich integriert ist.

13. Vorrichtung nach Anspruch 11, bei welcher optische Komponenten (34) wie z.B. Linsen, die aus einem geeigneten Material hergestellt sind, als Tiefpassfilter vorgesehen sind.

14. Vorrichtung nach einem der Ansprüche 11 bis 13, bei welcher das Schmalbandfilter mehrere einzelne Filterelemente umfasst.

15. Vorrichtung nach einem der Ansprüche 9 bis 14, welche eine Lichtquelle (20) umfasst, welche Licht mit einer Wellenlänge emittiert, bei welcher der Photoinitiator zwar absorbiert, jedoch nur einen geringen Absorptionskoeffizienten aufweist.

16. Vorrichtung nach einem der Ansprüche 9 bis 15, bei welcher die Einrichtung (5) zur Messung der Intensität des Lichts so ausgebildet und angeordnet ist, dass die Intensitätsmessung während der Herstellung der Formkörper erfolgt.
